# EUROPEAN PATENT SPECIFICATION

(11) **EP 1 878 951 B1**
(45) Date of publication and mention of the grant of the patent: **28.04.2010**
(21) Application number: 07111830.1
(22) Date of filing: 05.07.2007
(51) Int. Cl.: F16H 61/46

(54) **Control system for an agricultural vehicle.**
Steuerungssystem für ein landwirtschaftliches Fahrzeug
Système de contrôle pour véhicule agricole

(30) Priority: 14.07.2006 GB 0613965
(43) Date of publication of application: 16.01.2008
(73) Proprietor: CNH Belgium N.V., 8210 Zedelgem (BE)
(72) Inventor: Byttebier, Ward Marc Renaat, 8550, Zwevegem (BE); Paquet, Bert J.F., 8200, Sint Andries (BE)
(74) Representative: CNH IP Department

(56) References cited:
- EP-A- 0 967 107
- EP-A- 1 275 887
- EP-A- 1 439 337
- US-A- 5 542 251
- US-A- 5 873 427
- US-B1- 6 381 529

## Description

### Field of the invention

The present invention relates to a control system for an agricultural vehicle.

### Background of the invention

Agricultural vehicles such as combine harvesters and forage harvesters commonly have a hydrostatic transmission connecting the engine to the drive wheels of the vehicle. The speed of the vehicle over the ground is regulated by means of a controller that transmits to the hydrostatic transmission a demand signal which determines the no-load transmission ratio of the hydrostatic transmission, for example by varying the inclination of the swash plates of the pump of the transmission.

The manner in which the demand signal is set by the controller may vary depending on the mode of operation of the vehicle. For example, the vehicle may be operated in a manual mode in which the speed is selected by the driver using as a control device a so-called force based handle. Such a handle returns to a central position when released and can be displaced manually in forward and reverse directions. The degree of displacement from the central position determines the rate of acceleration or deceleration desired by the driver and the integral of the displacement over the time that the lever is actuated produces a command signal indicative of the desired transmission ratio.

In other operating modes, the harvester may receive command signals indicative of desired transmission ratio from other automated control devices. For example, when operating in a field with varying crop density, it is possible to engage an automated crop flow rate control device. In this case, the control system produces a command signal to set the speed of travel of the harvester in such a manner as to achieve an optimum crop processing rate. Where the crop is dense, a command signal will be sent to the controller of the transmission to maintain a relatively low speed and in less dense areas, the harvester will be driven faster.

Another possible control device can be used to achieve automated speed control, where after a desired speed has been set by the driver, the command signal setting the transmission ratio will vary constantly to reduce the error between the actual and desired speeds of the vehicle.

A problem of "overshoot" is encountered in the control of the transmission ratio of a harvester on account of the fact that the transmission cannot instantly obey the demand signals that it receives from the controller. The reason for this is that the build up and decay of the pressures in the hydrostatic transmission by the pump take some time to implement. If, for example, when operating in manual mode the force based handle is released after accelerating for some time because the desired speed has been attained, then instead of maintaining the prevailing speed, the vehicle will continue to accelerate. This can be disconcerting to the driver. In situations where the command signal is generated by an automated control device, this delay in the response of the transmission system can result in instability of control.

In US-A-5.542.251 a hydrostatic transmission is described in which corrective signals can be applied to the desired speed signals. A.o. a min/max window is formed which is calculated from the desired value signals, but which does not take account of the effective transmission ratio of the hydrostatic transmission.

### Summary of the invention

With a view to mitigating the foregoing disadvantages, the present invention provides in one aspect a control system for a hydrostatic transmission of an agricultural vehicle connecting the engine to the drive wheels of the vehicle and comprising a variable displacement hydrostatic pump and a hydrostatic motor, the control system comprising means for determining the prevailing transmission ratio and a controller for applying a demand signal to set the desired ratio of the hydrostatic transmission, characterised in that the magnitude of the demand signal applied by the controller to the transmission is limited such that the no-load transmission ratio corresponding to the demand signal does not differ from the prevailing measured transmission ratio by more than a predetermined amount.

The predetermined amount may either be a fixed offset across the entire range of transmission ratios or it may itself vary in proportion with the prevailing transmission ratio.

According to a second aspect of the invention, there is provided a method of operating a hydrostatic transmission of an agricultural vehicle connecting the engine to the drive wheels of the vehicle, which comprises receiving a command signal from a manually operated or automated control device for setting the transmission ratio, comparing the command signal to the prevailing transmission ratio, limiting the command signal to produce a demand signal that corresponds to a no-load transmission ratio differing from the prevailing measured transmission ratio by no more than a predetermined amount, and applying the demand signal to the transmission to set the transmission ratio.

### Brief description of the drawings

The invention will now be described further, by way of example, with reference to the accompanying drawings, in which:
Figure 1 is a block diagram of the drive train of an agricultural vehicle, and
Figure 2 shows graphs of variation with time of the desired and actual values of the transmission ratio and of the resulting vehicle acceleration.

### Detailed description of the preferred embodiment

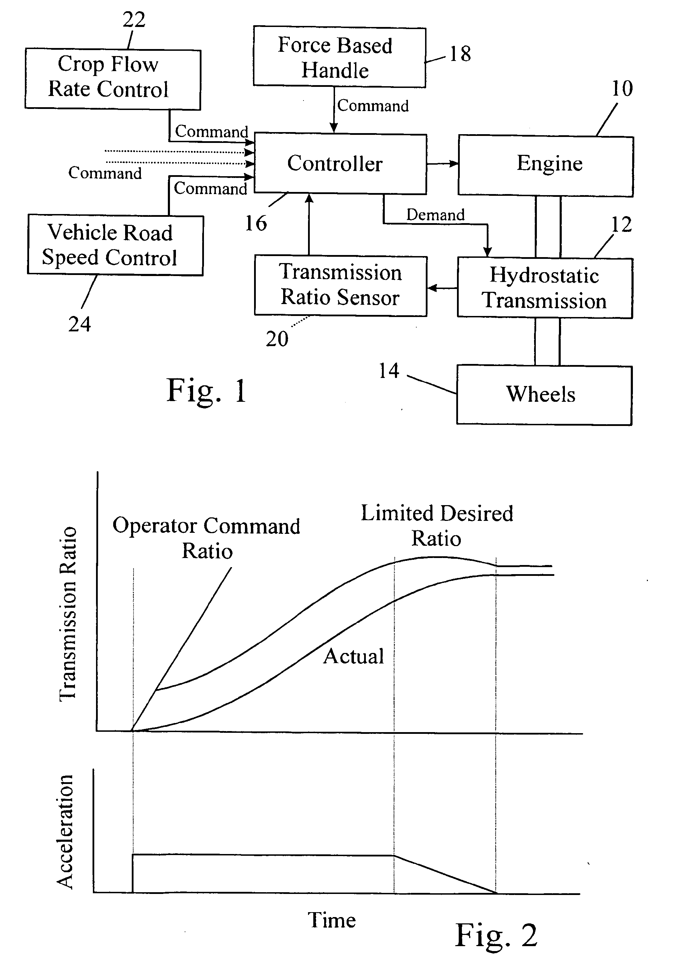

Figure 1 shows an engine 10 driving a hydrostatic transmission 12 connected to the driving wheels 14 of an agricultural vehicle. A controller 16 sends a demand signal to the hydrostatic transmission 12 to set its transmission ratio in accordance with command signals that it receives from various control devices, including a manual force based handle 18 operated by the driver of the vehicle, a crop flow rate control 22 and a vehicle road speed control 24. The latter controls are given only as examples and other possible command signal generating control devices are represented in Figure 1 by the arrows drawn in dotted lines.

In the case of the force based handle 18, the controller 16 computes a command signal by integrating the displacements of the handle over time. In the case of automated speed control systems such as those represented by the blocks 22 and 24, the command signal is received from the automated control device.

The engine speed in agricultural vehicles is normally maintained constant and when moving slowly this is both noisy and wasteful of fuel. When driving on metalled roads, the controller 16 of the illustrated preferred embodiment of the invention therefore sets both the engine speed and the transmission ratio, running the engine at its full speed only when the vehicle speed is high. Only after the engine has reached its optimum operating speed is the vehicle speed controlled solely by varying the transmission ratio.

It is possible for one of the automated control devices or the manual force based handle to generate a command signal that is beyond the capacity of the pump of the hydrostatic transmission. Because of this, when the handle is released, or when the magnitude of the command signal from an automated system returns to a steady state, instead of the set vehicle speed being maintained, the vehicle continues to accelerate. Conversely, if the handle is shifted to its maximum position in the opposite direction to reduce the vehicle speed, the pressure in the transmission 12 would drop significantly, and the reduced pressure would result in the vehicle continuing to decelerate even after the handle 18 has been released.

To mitigate this problem, the present invention sets a limit on the extent to which the pressure in the hydrostatic transmission is allowed to change. To achieve this, the control system 16 receives an additional signal from a transmission ratio sensor 20 connected to the transmission 12. The transmission ratio sensor may for example sense the position of the swash plates of the pump and motor of the hydrostatic transmission or it may compare the speeds of the input and output shafts of the transmission 12. A limit is then placed on the demand signal applied by the controller 16 to the transmission 12 so that desired value of transmission ratio, corresponding to the no-load transmission ratio, never differs from the actual value of the transmission ratio by more than a fixed offset or a fixed percentage.

The effect of this limitation of the maximum value of the demand signal is readily understood from reference to Figure 2. Though the operator command signal increases rapidly due to integration of a rapid movement of the force based handle 18, the desired ratio is limited so that it tracks the actual or prevailing transmission ratio and the vehicle accelerates at a constant rate. AS the desired speed is reached, the difference between the desired and actual ratios is reduced which results in a reduction in the rate of acceleration. After the desired speed has been reached and there is zero acceleration, the desired ratio is maintained slightly higher than the prevailing ratio compensate for frictional losses and maintain the vehicle moving with constant speed. Because there is no pressure build up in the transmission, there is no tendency for the vehicle to continue accelerating once the handle 18 has been released and allowed to return to its central position.

An analogous operation takes place during deceleration, only on this occasion the desired value of transmission ratio is not allowed to drop below the prevailing transmission ratio by more than a predetermined amount.

## Claims

1. A control system for a hydrostatic transmission (12) of an agricultural vehicle connecting the engine (10) to the drive wheels (14) of the vehicle and comprising a variable displacement hydrostatic pump and a hydrostatic motor, the control system comprising means (20) for determining the prevailing transmission ratio and a controller (16) for applying a demand signal to set the desired ratio of the hydrostatic transmission (12), **characterised in that** the magnitude of the demand signal applied by the controller (16) to the transmission (12) is limited such that the no-load transmission ratio corresponding to the demand signal does not differ from the prevailing measured transmission ratio by more than a predetermined amount.

2. A control system as claimed in claim 1, wherein the predetermined amount is a constant across the entire range of transmission ratios.

3. A control system as claimed in claim 1, wherein the predetermined amount varies in proportion with the prevailing transmission ratio.

4. A control system as claimed in any preceding claim, wherein the means for setting the desired value of the demand signal is a manually operated force based handle (18).

5. A method of operating a hydrostatic transmission (12) of an agricultural vehicle connecting the engine (10) to the drive wheels (14) of the vehicle, which comprises receiving a command signal from a manually operated (18) or automated (22,24) control device for setting the transmission ratio, comparing the command signal to the prevailing transmission ratio, limiting the command signal to produce a demand signal that corresponds to a no-load transmission ratio differing from the prevailing measured transmission ratio by no more than a predetermined amount, and applying the demand signal to the transmission (12) to set the transmission ratio.

## Patentansprüche

1. Steuersystem für ein hydrostatisches Getriebe (12) eines landwirtschaftlichen Fahrzeuges, das den Motor (10) mit den Antriebsrädern (14) des Fahrzeuges verbindet und eine mit veränderlicher Verdrängung arbeitende hydrostatische Pumpe und einen hydrostatischen Motor umfasst, wobei das Steuersystem Einrichtungen (20) zur Bestimmung des vorherrschenden Übersetzungsverhältnisses und eine Steuereinrichtung (16) zum Zuführen eines Anforderungssignals zum Einstellen eines Soll-Übersetzungsverhältnisses des hydrostatischen Getriebes (12) umfasst, **dadurch gekennzeichnet, dass** die Größe des von der Steuereinrichtung (16) an das Getriebe (12) angelegten Anforderungssignals derart begrenzt ist, dass sich das dem Anforderungssignal entsprechende Leerlauf-Übersetzungsverhältnis von dem vorherrschenden gemessenen Übersetzungsverhältnis nicht um mehr als einen vorgegebenen Betrag unterscheidet.

2. Steuersystem nach Anspruch 1, bei dem der vorgegebene Betrag eine Konstante über den gesamten Bereich von Übersetzungsverhältnissen ist.

3. Steuersystem nach Anspruch 1, bei dem sich der vorgegebene Betrag proportional zu dem vorherrschenden Getriebeverhältnis ändert.

4. Steuersystem nach einem der vorhergehenden Ansprüche, bei dem die Einrichtung zum Einstellen des Sollwertes des Anforderungssignals ein manuell betätigter kraftbasierter Hebel (18) ist.

5. Verfahren zum Betrieb eines hydrostatischen Getriebes (12) eines landwirtschaftlichen Fahrzeuges, dass den Motor (10) mit den Antriebsrädern (14) des Fahrzeuges verbindet, wobei das Verfahren den Empfang eines Befehlssignals von einem manuell betätigten (18) oder automatisiertem (22, 24) Steuergerät zum Einstellen des Getriebe-Übersetzungsverhältnisses, den Vergleich des Befehlssignals mit dem vorherrschenden Übersetzungsverhältnis, das Begrenzen des Befehlssignals zur Erzeugung eines Anforderungssignals, das einem Leerlauf-Übersetzungsverhältnis entspricht und sich von dem vorherrschenden gemessenen Verhältnis um nicht mehr als einen vorgegebenen Betrag unterscheidet, und das Zuführen des Anforderungssignals an das Getriebe (12) zum Einstellen des Übersetzungsverhältnisses umfasst.

## Revendications

1. Système de commande pour une transmission hydrostatique (12) d' un véhicule agricole reliant le moteur (10) aux roues motrices (14) du véhicule et comprenant une pompe hydrostatique à cylindrée variable et un moteur hydrostatique, le système de commande comprenant un moyen (20) pour déterminer le rapport de transmission rencontré et un contrôleur (16) destiné à appliquer un signal de demande pour régler le rapport désiré de la transmission hydrostatique (12), **caractérisé en ce que** l'amplitude du signal de demande appliqué par le contrôleur (16) à la transmission (12) est limitée de telle manière que le rapport de transmission de charge à vide correspondant au signal de demande ne diffère pas du rapport de transmission rencontré mesuré de plus d' une quantité prédéterminée.

2. Système de commande selon la revendication 1, **caractérisé en ce que** la quantité prédéterminée est une constante dans la gamme entière des rapports de transmission.

3. Système de commande selon la revendication 1, **caractérisé en ce que** la quantité prédéterminée varie en proportion du rapport de transmission rencontré.

4. Système de commande selon l'une quelconque des revendications précédentes, **caractérisé en ce que** le moyen pour régler la valeur désirée du signal de demande est une manette basée sur la force appliquée, actionnée manuellement (18).

5. Procédé de commande d' une transmission hydrostatique (12) d' un véhicule agricole reliant le moteur (10) aux roues motrices (14) du véhicule, qui comprend les étapes consistant à recevoir un signal de commande d' un dispositif de commande actionné manuellement (18) ou automatisé (22,24) pour régler le rapport de transmission, comparer le signal de commande au rapport de transmission rencontré, limiter le signal de commande pour produire un signal de demande qui corresponde à un rapport de transmission de charge à vide différant du rapport de transmission rencontré mesuré de pas plus d' une quantité prédéterminée, et appliquer le signal de demande à la transmission (12) pour régler le rapport de transmission.
